# EUROPEAN PATENT SPECIFICATION

(11) **EP 1 619 786 B1**
(45) Date of publication and mention of the grant of the patent: **03.11.2010**
(21) Application number: 05076663.3
(22) Date of filing: 20.07.2005
(51) Int. Cl.: H02P 1/42

(54) **Electronic startup device for hermetic compressors**
Elektronische Startvorrichtung für luftdichte Kompressoren
Dispositif de démarrage électronique pour compresseurs étanche à l'air

(30) Priority: 23.07.2004 BR 0403060
(43) Date of publication of application: 25.01.2006
(73) Proprietor: Tecumseh do Brasil Ltda., CEP 13565-900 Sao Carlos - SP (BR)
(72) Inventor: Botêga, Mario Luis Jr., Sousas, Campinas, SP (BR)
(74) Representative: Isern-Jara, Nuria

(56) References cited:
- US-A- 4 399 394
- US-A- 4 786 850
- US-A- 5 451 853
- US-A- 5 512 809

## Description

This invention is related with monophasic induction motors and, more specifically, with the startup of this type of motors, principally when applied in hermetic compressors.

As it is of common knowledge, hermetic compressors applied in refrigeration use, in majority of the cases, monophasic induction motors, due to the fact that they are of easy construction, as well as robust.

In low capacity applications, typically residential applications, these motors are formed basically by a rotor and a stator, wherein the latter is composed of a startup winding, or an auxiliary (SW) and a gear winding (RW).

Taking as an example a refrigerator, its compressor is activated periodically by a thermostat (T1), depending on the internal temperature of the respective hood. Thus, when the compressor is activated, its startup (SW) and gear (RW) windings are connected to a power source, normally the electric network, during a determined period of time (startup time - TP).

During this period of time, the currents that circulate through the startup (SW) and gear (RW) windings are electrically dephased, which assures the generation of electromagnetic torque during the startup. After this period, the startup winding (SW) is disconnected from the power source, maintaining connected only the gear winding (RW).

However in the case of permanent capacitor motors, the startup winding (SW) remains connected to the electrical network through the permanent capacitor. To perform the disconnection of the startup winding (SW), after the startup time (TP), it is common the use of startup devices based on thermistors, with positive temperature characteristic (PTC or PTC relay).

In this case, the PTC is placed in series with the startup winding (SW), and the electric current that then circulates through the PTC makes its electrical resistance increase, until the current that circulates through the startup winding (SW) is very small, practically turning it off.

The devices described above have, as an advantage, the constructive and working simplicity, however, they have as principal disadvantage the electrical energy consumption during the permanent system (of approximately 2W), that is, after the startup time (TP) there is permanent electrical energy consumption as long as the motor is in operation. This represents a serious problem for systems development with major energy efficiency.

Also, it is known from US-5451853 an starting device for a single phase induction motor which comprises a main winding and a starting winding provided with a starting positive temperature coefficient thermistor connected in series with said starting winding.

Thus before the above circumstances and with the purpose of overcoming them, that the electronic startup device for hermetic compressors was designed, which constitutes the object of this invention.

Thus, the principal objective of this invention is to present an electronic startup circuit for monophasic induction motors.

Another objective of this invention is the elaboration of an electronic startup device for monophasic induction motors with permanent capacitor.

Still another objective of this invention is to present an electronic startup circuit with low energy consumption, after the startup period of the motor, eliminating PTC consumption.

One more objective of this invention is to present the use of a unidirectional electronic key as PTC interconnection element to the monophasic motor.

Now, moving on to a brief description of this invention, it consists of essentially an electronic startup device for monophasic induction motors, which has an electronic key connecting the startup winding to the power source during a determined period of time, where this period id defined by an electronic control circuit, which turns on and turns off the referred electronic key.

One primary advantage of the electronic device of the present invention is related with the energy consumption in permanent system, that is, after the startup time, the energy consumption of the electronic device is a lot smaller than that of the actual devices that use only the solid state chip with positive temperature coefficient PTC.

Another advantage of the electronic device of this invention is that the PTC disconnection time is smaller the greater the supply voltage is and vice versa, that is, in situations where the supply voltage is smaller, the disconnection time is greater, since the PTC takes more time to warm up. With this, the startup of the compressor is assured, since the PTC is only disconnected after the startup.

One important characteristic of the electronic startup device, object of this invention, is the use of a unidirectional electronic key, like for example, although not limited to these, an SCR, a bipolar transistor, a MOSFET type transistor, an IGBT type transistor, and others, for the turning on and off control of the PTC chip and, consequently, of the startup circuit.

It is still worth adding that the possibility of use of these electronic devices of this invention with startup capacitor and with permanent capacitor constitutes another appreciable advantage.

Lastly, besides the abovementioned characteristics, the electronic startup device, object of this invention, uses few components, thus facilitating its production, and assuring also reduced dimensions.

The attached drawings illustrate this invention, wherein:
- Fig. 1: shows, in a simplified form, the interconnection of the electronic startup device with the compressor motor;
- Fig. 2: illustrates the electrical layout of the electronic startup device and its interconnection with the compressor motor; and
- Figs. 3 and 4: present some typical waveforms related to the electronic circuit, showing the behavior during the startup time and after this time (permanent system).

In accordance with what the above related figures illustrate, the electronic startup device DP for hermetic compressors, object of this invention, includes essentially an electronic circuit for startup of monophasic induction motors, operating only during the startup period of the referred motor, and composed of:
a) a rectifier circuit (B1) composed of diodes D1 to D4, which transforms a alternate electrical signal into a continuous electrical signal, creating a continuous current bus;
b) a solid state chip with positive temperature coefficient PTC in series with a unidirectional electronic key S1, connected in parallel with the continuous current bus, where such PTC chip and the unidirectional key S1 are in series with the startup winding SW of motor M;
c) a polarization circuit, which turns on the unidirectional electronic key S1; and
d) an electronic timing circuit (Timer), which turns off the unidirectional electronic key S1, disconnecting the series circuit composed of the PTC chip and the startup winding SW of motor M.

Still, referring to the unidirectional electronic key, it can have a multiplicity of constructive forms, such as: SCR, bipolar transistor, MOSFET transistor, IGBT transistor, or any type of semiconductor key that has as characteristic of conducting electric current in just one direction, and that has a control terminal.

At the same time, in the referred electronic circuit above, the polarization circuit of key S1 is formed by resistors R3 and R2, which maintain the unidirectional electronic key in conduction, making the PTC chip maintained connected to the startup winding SW of motor M, during the startup time.

On the other hand, the electronic timing circuit is formed by resistor R4, diodes D6 and D7, capacitor C1 and transistor Q1, which turns off the unidirectional electronic key S1 after a determined period of time (TD).

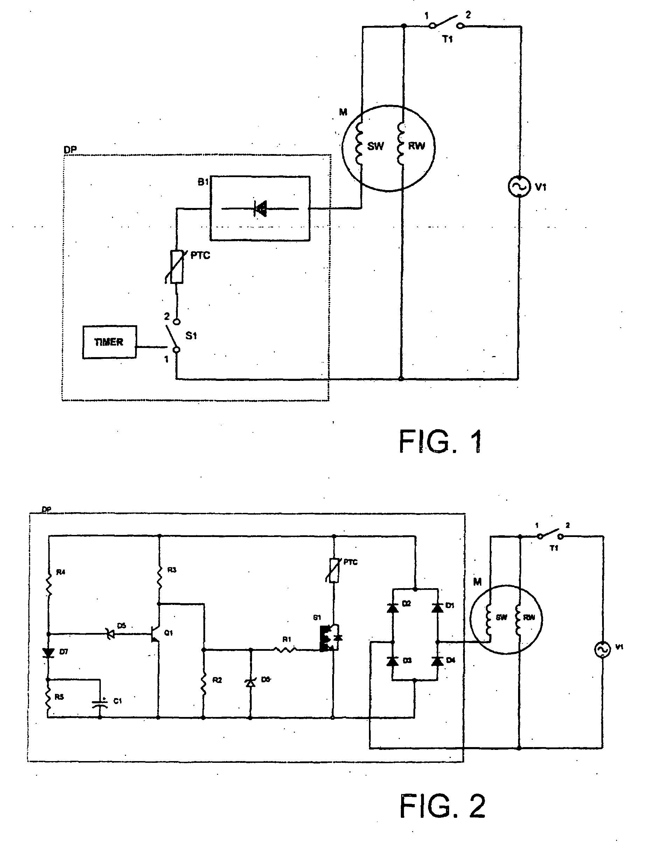

Now in reference, and more particularly, with the Figures, which illustrate the object of this invention, Fig. 1 shows the contact of thermostat T1, the alternating voltage source V1 that feeds the gear winding RW and the startup winding SW of motor M of the hermetic compressor, through the electronic key S1.

During the startup, after the contact of thermostat T1 closes, the unidirectional electronic key S1 is closed, turning on the startup winding SW of motor M to the alternating voltage source V1.

After the startup time, defined by the PTC chip, the timing circuit activates the unidirectional electronic key S1, disconnecting the startup winding SW of the alternating voltage source V1, leaving just the gear winding RW of motor M connected to the supply source V1. In permanent system (after the startup), the unidirectional electronic key S1 is maintained open, waiting for a new command from the thermostat T1.

At the same time, Fig. 2 shows the detailed layout of the electronic timing circuit and the interconnection of the startup device DP with the compressor motor M.

The circuit possesses basically a complete wave rectifier B1, a trigger circuit of the electronic key S1 and a timing circuit.

The startup time TP is given by the PTC chip; also, the turning off time TD from the PTC chip, that is, the moment in which the PTC is turned off from the circuit, is given by the timing circuit.

Diodes D1, D2, D3 and D4 form a complete wave type rectifier B1, having, in one input, the startup winding SW of motor M and, in the other, a supply source terminal V1.

At the same time, the output of rectifier B1 feeds the trigger circuit of the electronic key S1 and the timing circuit.

At the moment in which the circuit is energized, through the closing of the contact T1 of the thermostat, capacitor C1 is discharged and, with this, transistor Q1 is cut, the condition in which resistors R3 and R2 form a voltage divisor. Thus, the voltage over resistor R2 makes the electronic key S1 to close (enters in conduction).

From this moment, the startup winding SW current of motor M flows through the rectifier, PTC chip and electronic key S1.

With the current flowing through the PTC chip, this will warm up, and its electrical resistance will increase, thus reducing the current through the startup winding SW of motor M. The electrical resistance of the PTC chip will increase until the current through the startup winding SW of motor M is very low, flowing just the maintenance current of the PTC, that is, the necessary current to maintain it warmed up.

During the startup time, capacitor C1 initiates its load through resistor R4 and diode D7. The constant of circuit RC is given by resistor R4 and capacitor C1, such that diode D7 has the function of not allowing capacitor C1 to discharge through diode D6. This is the turning off time (TD) of the PTC chip. The turning off time (TD) can be adjusted in accordance with the application, wherein the following adjustments are possible: TD<TP; TD=TP and TD>TP;

Capacitor C1 will be loading until it reaches the zener voltage of diode D6. When this occurs, a current will be flowing through resistor R4, diode D6 and transistor base Q1, the moment in which transistor Q1 enters into saturation. With transistor Q1 saturated, the voltage over resistor R2 is practically zero, thus turning off electronic key S1.

When electronic key S1 is turned off, it makes the maintenance current of the PTC chip be eliminated, and with this it begins to cool down, necessary condition for a new startup of motor M, together with a new command of thermostat T1.

When the circuit is de-energized through the opening of thermostat T1, capacitor C1 is discharged through resistor R5. The re-startup time of the compressor remains linked to the necessary time for capacitor C1 to discharge.

It is important to point out that the unidirectional electronic key S1 can be any semiconductor that has a characteristic to conduct electric current in just one direction and has a control terminal.

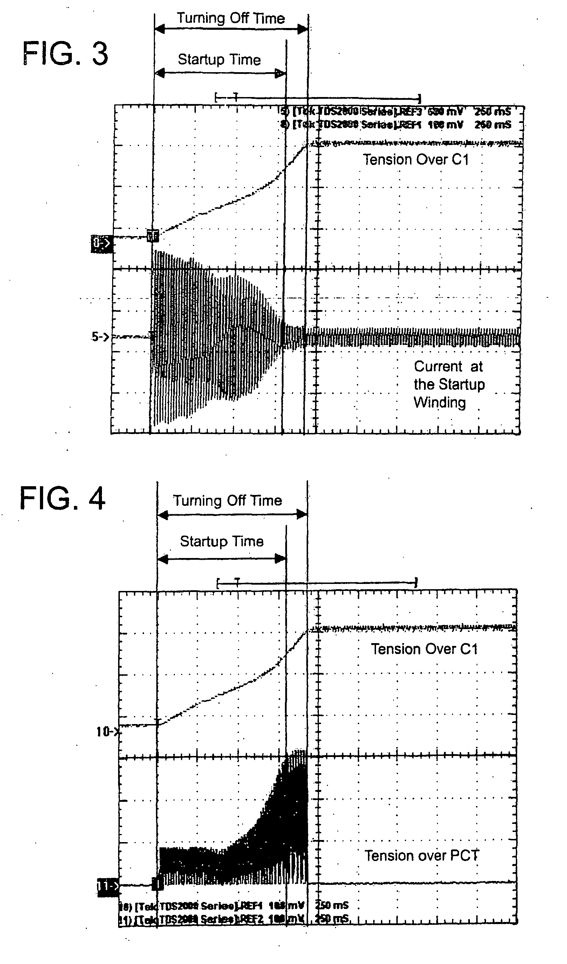

Figs. 3 and 4 are typical waveforms of this circuit, where it is possible to identify its basic operation.

## Claims

1. "ELECTRONIC STARTUP DEVICE FOR HERMETIC COMPRESSORS", bearing essentially an electronic circuit for startup of monophasic induction motors, operating only during the startup period of the referred motor, **characterized by** comprising:
a) a rectifier circuit (B1) that transforms a alternate electral signal into a continuous electrical signal, creating a continuous current bus;
b) a solid state chip with positive temperature coefficient (PTC) in series with a unidirectional electronic key (S1), connected in parallel with the continuous current bus, where such chip (PTC) and the unidirectional key (S1) are in series with the startup winding (SW) of motor (M);
c) a polarization circuit, which turns on the unidirectional electronic key (S1); and
d) an electronic timing circuit (Timer), which turns off the unidirectional electronic key (S1), disconnecting the series circuit composed of the chip (PTC) and the startup winding (SW) of motor (M).

2. "ELECTRONIC STARTUP DEVICE FOR HERMETIC COMPRESSORS", as claimed in 1, **characterized by** the fact that the polarization circuit is formed by resistors (R3 and R2), which maintains the unidirectional electronic key in conduction, keeping the chip (PTC) connected to the startup winding (SW) of motor (M), during the startup time.

3. "ELECTRONIC STARTUP DEVICE FOR HERMETIC COMPRESSORS", as claimed in 1, **characterized by** the fact that the electronic polarization circuit is formed by resistor (R4), diodes (D6 and D7), capacitor (C1) and transistor (Q1), which turns off the unidirectional electronic key (S1) after a determined period of time.

4. "ELECTRONIC STARTUP DEVICE FOR HERMETIC COMPRESSORS", as claimed in 1, **characterized by** the fact that the unidirectional electronic key (S1) can have a multiplicity of constructive forms, such as: SCR, bipolar transistor, MOSFET transistor, IGBT transistor, or any type of semiconductor key that has a characteristic to conduct electric current in just one direction, and that has a control terminal.

## Patentansprüche

1. Elektronische Startvorrichtungen zum Starten von hermetischen Kompressoren, die im wesentlichen eine elektronische Schaltung zum Starten von Einphasen-Induktionsmotoren umfasst, welche nur während der Startphase dieses Motors in Betrieb ist, **gekennzeichnet durch** folgende Bestandteile:
a) ein Gleichrichter (B1), der ein Wechselstromsignal in ein Gleichstromsignal verwandelt und dabei einen Gleichstrombus erzeugt;
b) ein Festkörperchip mit einem positiven Temperaturkoeffizienten (PTC) in Reihe mit einem mit dem Gleichstrombus parallel geschalteten elektronischen Einwegschalter (S1), wobei dieser Chip (PTC) und der Einwegschalter (S1) mit der Startwicklung (SW) des Motors (M) in Reihe geschaltet sind;
c) eine Polarisierungsschaltung, die den elektronischen Einwegschalter (S1) einschaltet, und
d) eine elektronische Timerschaltung (Timer), die den elektronischen Einwegschalter (S1) ausschaltet, indem sie die Reihenschaltung bestehend aus dem Chip (PTC) und der Startwicklung (SW) des Motors (M) ausschaltet.

2. Elektronische Startvorrichtung zum Starten von hermetischen Kompressoren nach Anspruch 1, **dadurch gekennzeichnet, dass** die Polarisierungsschaltung aus Widerständen (R3 und R2) besteht, die den elektronischen Einwegschalter während der Startphase in einem leitend Zustand beibehalten, indem der Chip (PTC) mit der Startwicklung (SW) des Motors (M) verbunden bleibt.

3. Elektronische Startvorrichtung zum Starten von hermetischen Kompressoren nach Anspruch 1, **dadurch gekennzeichnet, dass** die elektronische Polarisierungsschaltung aus dem Widerstand (R4), den Dioden (D6 und D7), dem Kondensator (C1) und dem Transistor (Q1) besteht, die den elektronischen Einwegschalter (S1) nach einem bestimmten Zeitraum ausschaltet.

4. Elektronische Startvorrichtung zum Starten von hermetischen Kompressoren nach Anspruch 1, **dadurch gekennzeichnet, dass** der elektronische Einwegschalter (S1) eine Vielzahl von Bauformen aufweisen kann wie etwa: SCR, Bipolartransistor, MOSFET-Transistor, IGBT-Transistor oder jegliche Art von Halbleiterschalter, der das Merkmal aufweist, dass er den elektrischen Strom nur in eine Richtung leitet und ein Steuerterminal besitzt.

## Revendications

1. Dispositif électronique pour le démarrage de compresseurs hermétiques comprenant essentiellement un circuit électronique pour le démarrage de moteurs d'induction monophasiques, qui travaille seulement pendant le période de démarrage du dit moteur, **caractérisé par**:
a) un circuit redresseur (B1) qui transforme un signal de courant alternatif en un signal de courant continu créant un bus de courant continu;
b) un chip d'état solide avec un coefficient de température positif (PTC) en série avec un interrupteur électronique unidirectionnel (Key) (S1), connecté en parallèle avec le bus de courant continu dans lequel le dit chip (PTC) et l'interrupteur unidirectionnel (S1) se trouvent en série avec le bobinage de démarrage (SW) du moteur (M);
c) un circuit de polarisation qui met en marche l'interrupteur électronique unidirectionnel (S1); et
d) un circuit électronique de temporisation (Timer) qui déconnecte l'interrupteur électronique unidirectionnel (S1), en déconnectant le circuit série composé par le chip (PTC) et l'enroulement de démarrage (SW) du moteur (M).

2. Dispositif électronique pour le démarrage de compresseurs hermétiques, selon la revendication 1, **caractérisé en ce que** le circuit de polarisation est formé par des résistances (R3 et R2) qui maintiennent l'interrupteur électronique unidirectionnel en situation de conduction en maintennant le chip (PTC) connecté au enroulement de démarrage (SW) du moteur (M) pendant le période de démarrage.

3. Dispositif électronique pour le démarrage de compresseurs hermétiques, selon la revendication 1, **caractérisé en ce que** le circuit électronique de polarisation est formé par la résistance (R4), les diodes (D6 et D7), le condensateur (C1) et le transistor (Q1) qui déconnecte l'interrupteur électronique unidirectionnel (S1) après un période de temps prédéterminé.

4. Dispositif électronique pour le démarrage de compresseurs hermétiques selon la revendication 1, **caractérisé en ce que** l'interrupteur électronique unidirectionnel (S1) peut adopter des multiples formes constructives telles que: SCR, transistor bipolaire, transistor MOSFET, transistor IGBT ou autre type d'interrupteur semi-conducteur avec des caractéristiques pour conduire le courant continu seulement dans une direction et qui à une borne de control.
